(19) Europäisches Patentamt / European Patent Office / Office européen des brevets

(11) **EP 4 005 115 B1**

(12) **EUROPEAN PATENT SPECIFICATION**

(45) Date of publication and mention of the grant of the patent:
**05.03.2025 Bulletin 2025/10**

(21) Application number: **20743151.1**

(22) Date of filing: **24.07.2020**

(51) International Patent Classification (IPC):
**H04B 10/70** (2013.01)

(52) Cooperative Patent Classification (CPC):
**H04B 10/70**

(86) International application number:
**PCT/EP2020/070954**

(87) International publication number:
**WO 2021/013989 (28.01.2021 Gazette 2021/04)**

(54) **METHOD TO SET A COMMON POLARIZATION REFERENCE FRAME**

VERFAHREN ZUR EINSTELLUNG EINES GEMEINSAMEN POLARISATIONSREFERENZBILDES

PROCÉDÉ POUR DÉFINIR UN CADRE DE RÉFÉRENCE DE POLARISATION COMMUN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2019 EP 19188180**

(43) Date of publication of application:
**01.06.2022 Bulletin 2022/22**

(73) Proprietor: **Österreichische Akademie der Wissenschaften**
**1010 Wien (AT)**

(72) Inventors:
• **HANDSTEINER, Johannes**
**1020 Wien (AT)**
• **HERBST, Thomas**
**3300 Winklarn (AT)**
• **SCHEIDL, Thomas**
**2722 Winzendorf (AT)**
• **STEINLECHNER, Fabian**
**07745 Jena (DE)**

(74) Representative: **Louis Pöhlau Lohrentz**
**Patentanwälte**
**Merianstrasse 26**
**90409 Nürnberg (DE)**

(56) References cited:
**US-A1- 2009 268 276**

• SCHEIDL T ET AL: "Space-to-ground quantum key distribution", PROCEEDINGS OF SPIE, SPIE, 1000 20TH ST. BELLINGHAM WA 98225-6705 USA, vol. 11180, 12 July 2019 (2019-07-12), pages 111801W - 111801W, XP060125505, ISSN: 0277-786X, ISBN: 978-1-5106-2687-4, DOI: 10.1117/12.2535987
• PENG-LIANG GUO ET AL: "Self-error-rejecting quantum state transmission of entangled photons for faithful quantum communication without calibrate reference frames", ARXIV.ORG, CORNELL UNIVERSITY LIBRARY, 201 OLIN LIBRARY CORNELL UNIVERSITY ITHACA, NY 14853, 1 September 2018 (2018-09-01), XP081573780, DOI: 10.1209/0295-5075/127/60001

**Description**

The invention concerns a method to provide a common polarization reference frame between an emitter and one or two receivers and comprising an emitter and one or two receivers with a common polarization reference frame. The emitter comprises a source to produce polarized photons in at least two non-orthogonal polarizations or polarization entangled photon pairs, and the receiver/s comprise(s) a detection means to determine the polarization of the polarized photons in at least two non-orthogonal polarization states, wherein the emitter and receivers are connected via optical channels.

Quantum communication, for example used for quantum key distribution (QKD) known for example from "Space-to-Ground Quantum Key Distribution" Proc. Of SPIE Vol. 11180, is using single photons for a secure and robust communication. For the communication, a common reference frame between the emitter and the one or more receivers has to be accomplished to compensate unknown polarization-transformation introduced by the transmission channel. To do so, the alignment was realized by polarization controllers with feedback control known for example from "US 2009/0268276 A1" or by a time-consuming method to ensure a common reference frame by an iteration of several alignment steps and the comparison of at least two non-orthogonal states in the emitter and the receivers. The typical approach is to align two basis vector sets iteratively (e.g. H horizontal and V vertical linearly polarized photons and +45° and -45° linearly polarized photons), where each iteration step affects the other basis set less. Also, alignment-free transmission methods are known, for example from "Self-error-rejecting quantum state transmission of entangled photons for faithful quantum communication without calibrate reference frames" ArXiv: 1809.00105v1.

An objective of the present invention is to provide an improved method to set a common polarization reference between the emitter and one receiver or more receivers.

The method to provide a common polarization reference frame between an emitter and a receiver is achieved by the method according to claim 1.

The emitter comprises a source to produce polarized photons in at least two non-orthogonal polarizations, and the receiver comprises a detection means to determine the polarization of the polarized photons in at least two non-orthogonal polarization states, wherein the emitter and receiver are connected via an optical channel. The optical channel comprises a transmission means to guide the polarized photons from the emitter to the receiver, and a first correction means to correct any unitary transformation of the polarization of the photons caused by the optical channel. The first correction means consists of a first correction component and a second correction component, wherein the first and second correction components are separate components. The method comprises the steps of

I) providing a local polarization reference frame with a local polarization reference means in the emitter with at least two non-orthogonal polarization states, a first local polarization reference state and a second local polarization reference state,
II) performing one or more calibration steps by adjusting the first correction component of the correction means and maximization and/or minimization of the detected photons in the detection means in the receiver in the first reference polarization state, in order to set the first local polarization reference state in the receiver,
III) performing one or more calibration steps by adjusting the second correction component of the correction means and maximization and/or minimization of the detected photons in the detection means in the receiver in the second reference polarization state, in order to set the second local polarization reference state in the receiver.

A very useful way to visualize polarization states and their transformations is the geometrical representation on the Poincaré sphere. In this representation, a pure state corresponds to a point on the surface of the sphere with polar coordinates theta and phi. Polarization qubits can be conveniently detected and manipulated using only simple optical devices such as wave plates and polarizers and any unitary (coherence conserving) transformation introduced by birefringent elements can be understood as a rotation of the polarization states on the Poincaré-sphere about a particular axis. A key prerequisite for polarization-mode encoded quantum communication is setting and maintaining a common polarization reference frame between the emitter, preferably the source and the receiver, preferably the detection means. I.e., any polarization vector on the Poincaré-sphere in the source reference frame must be mapped to some known counterpart on the Poincaré-sphere at the receiver. For example, the source reference frame is defined by the labeling of the axes of the non-linear crystal or a polarizer in the emitter. The mapping is equivalent to undoing any unitary transformation introduced from the source to the receiver and matching the computational basis polarizations (H horizontal linear polarization and V vertical linear polarization). However, since quantum information processing protocols usually involve measurements in a second, non-orthogonal measurement basis, any superposition of the modes (for example $D = H + V$ diagonal linear polarization and $A = H - V$ antidiagonal linear polarization) must also be matched from the source to the receiver, thus mapping the coherent measurement basis from the source to the receiver.

Here, a simple two-step alignment method is proposed that ensures complete alignment of the entire Poincaré-sphere from transmitter to receiver without the need for iterative alignment of two mutually unbiased measurement bases. A logic computational basis between the emitter and the receiver is matched first with the first correction component. In a second step, the coherent measurement basis is aligned, decoupled form the adjustment of the logic computational basis. The alignment of the first step ensures that the first basis is set between the emitter and the receiver, and is ambiguous with respect to the relative phase phi. This transformation can be understood as a rotation of the Poincaré-sphere, for example about the axis combining H and V. This remaining Poincaré-sphere transformation is adjusted in the manner that does not introduce an additional rotation of the first basis (as an example here the H/V basis), by introducing only an additional relative variable phase between the basis vectors of the polarization basis used for the alignment in the first step. This can be achieved, for example, using a tilted wave-plate, a quarter-wave/half-wave/quarter-wave combination, a Soleil Babinet Compensator that introduces only a relative phase.

The object of the invention is also achieved by an apparatus to provide a common reference frame between an emitter and one receiver in at least two non-orthogonal polarization states, wherein the emitter comprises a source to produce polarized photons in at least two non-orthogonal polarizations adapted to perform step I), and wherein the receiver comprises a detection means to determine the polarization of the polarized photons in at least two non-orthogonal polarization states, and wherein the emitter and receiver are connected via an optical channel comprising a transmission means to guide the polarized photons from the emitter to the receiver, and a first correction means to correct any unitary transformation of the polarization of the photons caused by the optical channel, and wherein the first correction means consists of at least two separate components, a first correction component adapted to perform step II) and a second correction component adapted to perform step III).

In a preferred embodiment of the methods and the apparatus with one receiver, the first and/or the second correction component of the first correction means comprises a variable wave-plate, or a tilted wave-plate, or a soleil Babinet compensator, or a combination of a first quarter wave-plate, a half wave-plate, and a second quarter-wave plate, or a fiber controller creating the behavior of a first quarter wave-plate, a half wave-plate, and a second quarter-wave plate by a first, second, and third spools of the fiber, or a rotatable fiber squeezer.

In a preferred embodiment of the methods and the apparatus with one receiver, the local polarization reference means comprises one of a polarizing means, or a polarizing beam splitter, or a polarizer, or down converted photons, or a non-linear crystal, or a laser producing polarized photons. In a preferred embodiment of the methods and the apparatus with one receiver, the local polarization reference means comprise in addition an optical element to change the polarization of the photons in at least two non-orthogonal polarizations, preferably a wave plate.

In a preferred embodiment of the methods with one receiver, the calibration step of the first correction component is performed in order to compensate the unitary transformation of the first emitter polarization state caused by the optical channel.

In a preferred embodiment of the methods and the apparatus with one receiver, the calibration step of the second correction component is performed in order to compensate the unitary transformation of the second emitter polarization state caused by the optical channel.

In a preferred embodiment of the methods and the apparatus with one receiver, whereas each receiver can measure the photons in at least two orthogonal states in its non-orthogonal basis.

In a preferred embodiment of the methods and the apparatus with one receiver, the transmission channel is a free-space channel, preferably air or vacuum or any other atmosphere or a liquid. In a preferred embodiment of the methods and the apparatus with one receiver, the first correction component of the first correction means comprises a variable wave-plate, or a tilted wave-plate, or a Babinet-soleil compensator, or a combination of a first quarter wave-plate, a half wave-plate, and a second quarter-wave plate. In a preferred embodiment of the methods and the apparatus with one receiver, the second correction component of the first correction means comprises a variable wave-plate, or a tilted wave-plate, or a Babinet-soleil compensator, or a combination of a first quarter wave-plate, a half wave-plate, and a second quarter-wave plate.

In a preferred embodiment of the methods and the apparatus with one receiver the transmission channel is the wave guide, preferably a fiber.

In a preferred embodiment of the methods and the apparatus with one receiver, the transmission means comprises two coupling means and a waveguide, preferably a fiber, connecting the two coupling means, wherein the first coupling means couples the photons from the emitter into the fiber and the second coupling means couples the photons out of the fiber into the first receiver. In a preferred embodiment of the methods and the apparatus with one receiver, the first correction component of the first correction means comprises a first quarter wave-plate, and a half wave-plate, and a second quarter-wave plate, before the first coupling means or after the second coupling means, or a fiber controller creating the behavior of a first quarter wave-plate, a half wave-plate, and a second quarter-wave plate by a first, second, and third spools, of the fiber or a rotatable fiber squeezer in the fiber. In a preferred embodiment of the methods and the apparatus with one receiver, the second correction component of the first correction means comprises a variable wave-plate, or a tilted wave-plate, or a soleil Babinet compensator, or a combination of a first quarter wave-plate, a half wave-plate, and a second quarter-wave plate, before the first coupling means or after the second coupling means, or a fiber controller creating the behavior of a first quarter wave-plate, a half wave-plate, and a second quarter-wave plate by a first, second, and third spools of the fiber, or a rotatable fiber squeezer in the fiber.

In a preferred embodiment of the methods with one receiver, the first or the second emitter polarization state is a linear horizontal/vertical, or linear 45°/-45° polarization or left/right circular polarization.

As an example, here the alignment and calibration for an emitter, which produces at least horizontal and diagonal polarized photons is explained. The local reference frame can for example be set with a polarizer. Sending horizontal polarized photons (H) from the emitter to the receivers, the detected events at the receiver in the corresponding vertical (V) detector should be minimized by the first correction means. Subsequently, diagonal polarized photons (D) are transmitted to the receiver and the corresponding detected events at the receiver in the corresponding antidiagonal (A) detector should be minimized by the second correction means.

In a preferred embodiment of the methods, the common polarization reference frame is provided between an emitter and two receivers, wherein the emitter is a laser or a photon source producing polarized photons in at least two non-orthogonal polarizations, and wherein the first receiver comprises a first detection means to determine the polarization of the polarized photons in at least two non-orthogonal polarization stats, and the second receiver comprises a second detection means to determine the polarization of the polarized photons in at least two non-orthogonal polarization states. A first optical channel, connecting the emitter and the first receiver, comprising a first transmission means to guide the polarized photons from the emitter to the first receiver, and a second optical channel, connecting the emitter and the second receiver, comprising a second transmission means to guide the polarized photons from the emitter to the second receiver, and wherein the first optical channel comprises a first correction means to correct any unitary transformation of the polarization of the photons caused by the first optical channel, and/or wherein the second optical channel comprises a second correction means to correct any unitary transformation of the polarization of the photons caused by the second optical channel, and wherein the first and/or second correction means each consists respectively of a first correction component and a second correction component, wherein the emitter sends polarized photons in the first optical channel to the first receiver and in the second optical channel to the second receiver, wherein the calibration of the common polarization reference frame between the emitter and the first and/or second receiver, or between the first and the second receiver is according to one of the methods described above.

In a preferred embodiment of the apparatus, the common polarization reference frame is provided between an emitter and two receivers, wherein the emitter comprises a laser or a photon source producing polarization photons in at least two non-orthogonal polarizations adapted to perform step I), wherein the first receiver comprises a first detection means to determine the polarization of the polarized photons in at least two non-orthogonal polarization states and the second receiver comprises a second detection means to determine the polarization of the polarized photons in at least two non-orthogonal polarization states, wherein the laser or the photon source and the first receiver are connected via a first optical channel comprising a first transmission means to guide the polarized photons from the emitter to the first receiver, and a first correction means to correct any unitary transformation of the polarization of the photons caused by the first optical channel, and wherein the laser or the photon source and the second receiver are connected via a second optical channel comprising a second transmission means to guide the polarized photons from the emitter to the second receiver, and a second correction means to correct any unitary transformation of the polarization of the photons caused by the second optical channel, wherein the emitter sends polarized photons in the first optical channel to the first receiver and in the second optical channel to the second receiver, wherein the first and/or second correction means consists respectively of a first correction component adapted to perform step II) and a second correction component adapted to perform step III).

In a preferred embodiment of the methods and the apparatus with two receivers, the first and/or the second correction component of the first and/or the second correction means comprises a variable wave-plate, or a tilted wave-plate, or a soleil Babinet compensator, or a combination of a first quarter wave-plate, a half wave-plate, and a second quarter-wave plate, or a fiber controller creating the behavior of a first quarter wave-plate, a half wave-plate, and a second quarter-wave plate by a first, second, and third spools of the fiber, or a rotatable fiber squeezer in the fiber.

In a preferred embodiment of the methods and the apparatus with two receivers, the local polarization reference means comprises one of a polarizing means, or a polarizing beam splitter, or a polarizer, or down converted photons, or a non-linear crystal, or a laser producing polarized photons. In a preferred embodiment of the methods and the apparatus with two receivers, the local polarization reference means comprises in addition an optical element to change the polarization of the photons in at least two non-orthogonal polarizations, preferably a wave plate.

In a preferred embodiment of the methods with two receivers, the first or the second emitter polarization state is a linear horizontal/vertical, or linear 45°/-45° polarization or left/right circular polarization.

In a preferred embodiment of the methods with two receivers, the calibration step of the first correction component of the first correction means is performed in order to compensate the unitary transformation of the first emitter polarization state caused by the first optical channel.

In a preferred embodiment of the methods with two receivers, the calibration step of the first correction component of the second correction means is performed in order to compensate the unitary transformation of the first emitter polarization state caused by the second optical channel.

In a preferred embodiment of the methods with two receivers, the calibration step of the second correction component of the first correction means is performed in order to compensate the unitary transformation of the second emitter polarization state caused by the first optical channel.

In a preferred embodiment of the methods with two receivers, the calibration step of the second correction component of the second correction means is performed in order to compensate the unitary transformation of the second emitter polarization state caused by the second optical channel.

In a preferred embodiment of the methods and the apparatus with two receivers, each receiver can measure the photons in at least two orthogonal states in its non-orthogonal basis.

In a preferred embodiment of the methods and the apparatus with two receivers, the photon source is an entangled photon source producing polarization entangled photon pairs, wherein one photon of each entangled photon pair is sent in the first optical channel to the first receiver and the second photon of each entangled photon pair is sent in the second optical channel to the second receiver.

In a preferred embodiment of the methods with an emitter and two receivers, the method comprises the further steps of

IV) performing one or more calibration steps by adjusting the first correction component of the first and/or second correction means and maximization and/or minimization of the correlations of the entangled photon pairs in both receivers in the first emitter polarization state in order to set the first local polarization state in the first and/or second receiver, and/or

V) performing one or more calibration steps by adjusting the second correction component of the first and/or second correction means and maximization and/or minimization of the correlations of the entangled photon pairs in both receivers in the second emitter polarization state in order to set the second local polarization state in the first and/or second receiver.

In a preferred embodiment of the methods with two receivers, the local polarization reference frame in step I) is set by a polarizing beam splitter, or a polarizer, or the polarization of a down converted photon, or the axes of a non-linear crystal, and the propagation of the photon beam through this optical component, or is set by the detection means of the first receiver comprising a polarizing beam splitter, or a polarizer.

In a preferred embodiment of the methods and the apparatus with two receivers, the first and/or second transmission channel is/are free-space channel/s, preferably air or vacuum or any other atmosphere or a liquid. In a preferred embodiment of the methods and the apparatus with two receivers, the first correction component of the first and/or second correction means comprises a variable wave-plate, or a tilted wave-plate, or a Babinet-soleil compensator, or a combination of a first quarter wave-plate, a half wave-plate, and a second quarter-wave plate. In a preferred embodiment of the methods and the apparatus with two receivers, the second correction component of the first and/or second correction means comprises a variable wave-plate, or a tilted wave-plate, or a Babinet-soleil compensator, or a combination of a first quarter wave-plate, a half wave-plate, and a second quarter-wave plate.

In a preferred embodiment of the methods and the apparatus with two receivers, the transmission channel is a wave guide, preferably a fiber. In a preferred embodiment of the methods and the apparatus with two receivers, the first and/or second optical channel comprises two coupling means and a waveguide, preferably a fiber, connecting the two coupling means, wherein the first coupling means couples the photons from the emitter into the fiber and the second coupling means couples the photons out of the fiber into the first and/or second receiver. In a preferred embodiment of the methods and the apparatus with two receivers, the first correction component of the first and/or second correction means comprises a first quarter wave-plate, and a half wave-plate, and a second quarter-wave plate, before the first coupling means or after the second coupling means, or a fiber controller creating the behavior of a first quarter wave-plate, a half wave-plate, and a second quarter-wave plate by a first, second, and third spools, of the fiber or a rotatable fiber squeezer in the fiber.

In a preferred embodiment of the methods and the apparatus with two receivers, the second correction component of the first and/or second correction means comprises a variable wave-plate, or a tilted wave-plate, or a soleil Babinet compensator, or a combination of a first quarter wave-plate, a half wave-plate, and a second quarter-wave plate, before the first coupling means or after the second coupling means, or a fiber controller creating the behavior of a first quarter wave-plate, a half wave-plate, and a second quarter-wave plate by a first, second, and third spools of the fiber, or a rotatable fiber squeezer in the fiber.

The object of the invention is also achieved by a method to provide an emitter and two receivers with a common polarization reference frame according to claim 7. The emitter is an entangled photon source, producing polarization entangled photon pairs, and wherein the first receiver comprises a first detection means to determine the polarization of the polarized photons in at least two non-orthogonal polarization states and the second receiver comprises a second detection means to determine the polarization of the polarized photons in at least two non-orthogonal polarization states, and a first optical channel, connecting the emitter and the first receiver, comprising a first transmission means to guide the polarized photons from the emitter to the first receiver, and a second optical channel, connecting the emitter and the second receiver, comprising a second transmission means to guide the polarized photons from the emitter to the second receiver, and wherein one photon of each entangled photon pair is sent in the first optical channel to the first receiver and the second photon of each entangled photon pair is sent in the second optical channel to the second receiver, wherein the first optical channel comprises a first correction means to correct any unitary transformation of the polarization of the photons caused by the first optical channel, and/or wherein the second optical channel comprises a second correction means to correct any unitary transformation of the polarization of the photons caused by the second optical channel, and/or wherein the emitter comprises a first and/or second correction means to correct any unitary transformation of the polarization of the photons caused by the first and/or second optical channel and wherein the first and/or second correction means each consists respectively of a first correction component and a second correction component, and wherein the calibration of the common polarization reference frame between the emitter and the first and/or second receiver or the first and the second receiver is according to the steps

I) providing a local polarization reference frame with a local polarization reference means in the emitter with at least two non-orthogonal polarization states, a first local polarization reference state and a second local polarization reference state,

II) performing one or more calibration steps by adjusting the first correction component of the first and/or second correction means and maximization and/or minimization of the correlations of the entangled photon pairs in both receivers in the first local polarization reference state, in order to set the first local polarization reference state in the first and/or second receiver,

III) performing one or more calibration steps by adjusting the second correction component of the first and/or second correction means and maximization and/or minimization of the detection of the correlations of the entangled photon pairs in both receivers in the second local polarization reference state, in order to set the second local polarization reference state in the first and/or second receiver.

As an emitter, entangled photons can be produced via numerous schemes by an entangled photon source, for example by spontaneous parametric down-conversion in a non-linear crystal. With an entangled photon source, for example, a maximally polarization-entangled Bell state like

$$|\Phi\rangle = \frac{1}{\sqrt{2}}\left(|H\rangle|H\rangle + e^{i\varphi}|V\rangle|V\rangle\right) or \ |\Psi\rangle =$$

$$\frac{1}{\sqrt{2}}\left(|H\rangle|V\rangle + e^{i\varphi}|H\rangle|V\rangle\right)$$

can be produced. The unique quantum feature of such entangled Bell states is that they also exhibit correlations in other measurement bases. In order to exploit the polarization correlations, for example, in quantum information processing, the photon pairs must be transmitted to the first and second receivers (Alice and Bob) in a transmission channel. One or both transmission channels can introduce a transformation of the polarization reference frame. Due to that, the emitter and the first and second receivers (Alice and Bob) must set a common polarization reference frame. With common polarization reference frame in the emitter and both receivers, for example, the nonlocal correlations in the entangled state can be verified, exploited and used.

A very useful way to visualize polarization states and their transformations is the geometrical representation on the Poincaré sphere. In this representation, a pure state corresponds to a point on the surface of the sphere with polar coordinates theta and phi. Polarization qubits can be conveniently detected and manipulated using only simple optical devices such as wave plates and polarizers and any unitary (coherence conserving) transformation introduced by birefringent elements can be understood as a rotation of the polarization states on the Poincaré-sphere about a particular axis. A key prerequisite for polarization-mode encoded quantum communication is setting and maintaining a common polarization reference frame between the emitter, preferably the source and the receivers, preferably the detection means. I.e., any polarization vector on the Poincaré-sphere in the source reference frame must be mapped to some known counterpart on the Poincaré-sphere at the receivers. For example, the source reference frame is defined by the labeling of the axes of the non-linear crystal or a polarizer in the emitter. The mapping is equivalent to undoing any unitary transformation introduced from the source to the receivers and matching the computational basis polarizations (H horizontal linear polarization and V vertical linear polarization). However, since quantum information processing protocols usually involve measurements in a second, non-orthogonal measurement basis, any superposition of the modes (for example $D = H + V$ diagonal linear polarization and $A = H - V$ antidiagonal linear polarization) must also be matched from the source to the receivers, thus mapping the coherent measurement basis from the source to the receivers.

Here, a simple two-step alignment method is proposed that ensures complete alignment of the entire Poincaré-sphere from transmitter to receivers without the need for iterative alignment of two mutually unbiased measurement bases. A logic computational basis between the emitter and the receivers is matched first with the first correction component. In a second step, the coherent measurement basis is aligned, decoupled from the adjustment of the logic computational basis. The alignment of the first step ensures that the first basis is set between the emitter and the receivers, and is ambiguous with respect to the relative phase phi. This transformation can be understood as a rotation of the Poincaré-sphere, for example about the axis combining H and V. This remaining Poincaré-sphere transformation is adjusted in the manner that does not introduce an additional rotation of the first basis (as an example here the H/V basis), by introducing only an additional relative variable phase between the basis vectors of the polarization basis used for the alignment in the first step. This can be achieved, for example, using a tilted wave-plate, a quarter-wave/half-wave/quarter-wave combination, a Soleil Babinet Compensator that introduces only a relative phase with respect to the H/V basis of the entangled photon source, or a polarizer or polarizing beam splitter in the receiver. In the case of a polarization-entangled photon source, this phase can also be absorbed into the phase of the entangled photon generation.

In a preferred embodiment of the apparatus, the common polarization reference frame is provided between an emitter and two receivers, wherein the emitter comprises an entangled photon source adapted to perform step I), wherein the first receiver comprises a first detection means to determine the polarization of the polarized photons in at least two non-orthogonal polarization states and the second receiver comprises a second detection means to determine the polarization of the polarized photons in at least two non-orthogonal polarization states, and a first optical channel, connecting the emitter and the first receiver, comprising a first transmission means to guide the polarized photons from the emitter to the first receiver, and a second optical channel, connecting the emitter and the second receiver, comprising a second transmission means to guide the polarized photons from the emitter to the second receiver, and wherein one photon of each entangled photon pair is sent in the first optical channel to the first receiver and the second photon of each entangled photon pair is sent in the second optical channel to the second receiver, wherein the first optical channel comprises a first correction means to correct any unitary transformation of the polarization of the photons caused by the first optical channel, and/or wherein the second optical channel comprises a second correction means to correct any unitary transformation of the polarization of the photons caused by the second optical channel, and/or wherein the emitter comprises a first and/or second correction means to correct any unitary transformation of the polarization of the photons caused by the first and/or second optical channel and wherein the first and/or second correction means each consist respectively of a first correction component adapted to perform step II) and a second correction component adapted to perform step III).

In a preferred embodiment of the methods and the apparatus with two receivers, the first and/or the second correction component of the first and/or the second correction means comprises a variable wave-plate, or a tilted wave-plate, or a soleil Babinet compensator, or a combination of a first quarter wave-plate, a half wave-plate, and a second quarter-wave plate, or a fiber controller creating the behavior of a first quarter wave-plate, a half wave-plate, and a second quarter-wave plate by a first, second, and third spools of the fiber, or a rotatable fiber squeezer in the fiber or the first and/or the second correction component is realized by changing the pump polarization of the entangled photon source.

In a preferred embodiment of the methods and the apparatus with two receivers, the local polarization reference means comprises one of a polarizing means, or a polarizing beam splitter, or a polarizer, or down converted photons, or a non-linear crystal.

In a preferred embodiment of the methods with two receivers, the calibration step of the first correction component of the first correction means is performed in order to compensate the unitary transformation of the first emitter polarization state caused by the first and/or second optical channel.

In a preferred embodiment of the methods with two receivers, the calibration step of the first correction component of the second correction means is performed in order to compensate the unitary transformation of the first emitter polarization state caused by the first and/or second optical channel.

In a preferred embodiment of the methods and the apparatus with two receivers, the calibration step of the second correction component of the first correction means is performed in order to compensate the unitary transformation of the second emitter polarization state caused by the first and/or second optical channel.

In a preferred embodiment of the methods and the apparatus with two receivers, the calibration step of the second correction component of the second correction means is performed in order to compensate the unitary transformation of the second emitter polarization state caused by the first and/or second optical channel.

In a preferred embodiment of the methods with two receivers, the local polarization reference frame in step I) is set by the polarization of down converted photons, or the axes of a non-linear crystal, and the propagation of the photons through this optical component, or by a polarizing beam splitter in a Sagnac entangled photon source.

In a preferred embodiment of the methods and the apparatus with two receivers, each receiver can measure the photons in at least two orthogonal states in its non-orthogonal basis.

In a preferred embodiment of the methods and the apparatus with two receivers, the emitter comprises the entangled photon source and one or two coupling means with a first part of a waveguide. The transmission means consist of the remaining waveguide to the receivers. In this embodiment, the coupling means and a part of the waveguides are part of the emitter, preferably parts of the entangled photon source. This allows, for example, that the first correction component in the emitter can be arranged in the waveguide and the second correction component in the emitter can be arranged in the entangled photon source.

In a preferred embodiment of the methods and the apparatus with two receivers, the first and/or second transmission channel is/are a free-space channel/s, preferably air or vacuum or any other atmosphere or a liquid. In a preferred embodiment of the methods and the apparatus with two receivers, the first correction component of the first and/or second correction means comprises a first quarter wave-plate, a half wave-plate, and a second quarter-wave plate or is realized by changing the pump polarization of the entangled photon source. In a preferred embodiment of the methods and the apparatus with two receivers, the second correction component of the first and/or second correction means comprises a variable wave-plate, or a tilted wave-plate, or a Babinet-soleil compensator, or a combination of a first quarter wave-plate, a half wave-plate, and a second quarter-wave plate or is realized by changing the pump polarization of the entangled photon source.

In a preferred embodiment of the methods and the apparatus with two receivers, the transmission channel is a wave guide, preferably a fiber.

In a preferred embodiment of the methods and the apparatus with two receivers, the first and/or second optical channel comprises one coupling means and a waveguide, preferably a fiber, connecting the optical channel to the first and/or second receiver, wherein the first coupling means couples the photons from the emitter into the fiber. In a preferred embodiment of the methods and the apparatus with two receivers, the first and/or second optical channel comprises two coupling means and waveguide, preferably a fiber, connecting the two coupling means, wherein the first coupling means couples the photons from the emitter into the fiber and the second coupling means couples the photons out of the fiber into the first and/or second receiver. In a preferred embodiment of the methods and the apparatus with two receivers, the first correction component of the first and/or second correction means comprises a first quarter wave-plate, and a half wave-plate, and a second quarter-wave plate, before the first coupling means or after the second coupling means, or a fiber controller creating the behavior of a first quarter wave-plate, a half wave-plate, and a second quarter-wave plate by a first, second, and third spools, of the fiber or a rotatable fiber squeezer in the fiber or is realized by changing the pump polarization of the entangled photon source.

In a preferred embodiment of the methods and the apparatus with two receivers, the second correction component of the first and/or second correction means comprises a variable wave-plate, or a tilted wave-plate, or a soleil Babinet compensator, or a combination of a first quarter wave-plate, a half wave-plate, and a second quarter-wave plate, before the first coupling means or after the second coupling means, or a fiber controller creating the behavior of a first quarter wave-plate, a half wave-plate, and a second quarter-wave plate by a first, second, and third spools of the fiber, or a rotatable fiber squeezer in the fiber or is realized by changing the pump polarization of the entangled photon source.

In a preferred embodiment of the methods with two receivers, the first or the second emitter polarization state is a linear horizontal/vertical, or linear 45°/-45° polarization or left/right circular polarization.

As an example, here the alignment and calibration for a polarization-entangled photon source as an emitter with a local reference frame defined by the axes of the non-linear crystal is explained. The local reference frame can also be set by a polarizing beam splitter in a Sagnac loop source, producing entangled photons or by pumping the photon source to produce, for example, only HH photons. These polarization measurements are performed using polarizers in the transmission channels. For example, the maximally-entangled Psi- state exhibits anti-correlation in any measurement basis. In order to set this state also in the receiver, it is sufficient to ensure that the joint detection probability for H/H coincidence detection of photon pairs between both receivers are minimized (with H as linear horizontal polarization and V as linear vertical polarization). I.e., when the two polarizers are in parallel, or the photon source is pumped to produce only HH photons (denoting H as horizontal linear polarization in both polarizer), the first correction component of the first and/or second correction means has to be set to detect a minimum of coincidence counts (two-photon detection events of photon pairs).

Once this has been achieved (for example by comparison of the contrast of H/H and H/V coincidence counts), the local polarization measurement is changed to another measurement basis in the local reference frame, a non-orthogonal state to the first H/H polarization state. In the example of the Phi- state, a minimum of coincidence counts (two-photon detection events of photon pairs) is also expected for measurement in the 45°/-45° measurement basis (with 45° as linear polarization at 45° and -45° as linear polarization at -45°). This is also expected for left and right circular polarization. This can be achieved by changing the pump polarization of the entangled photon source, specifically the relative phase phi between the horizontal and vertical pump photon components. This can also be achieved by a second correction means comprising a variable wave-plate, or a tilted wave-plate, or a soleil Babinet compensator, or a combination of a first quarter wave-plate, a half wave-plate, and a second quarter-wave plate, before the first coupling means or after the second coupling means, or a fiber controller creating the behavior of a first quarter wave-plate, a half wave-plate, and a second quarter-wave plate by a first, second, and third spools of the fiber, or a rotatable fiber squeezer in the fiber.

The alignment of the first step has ensured in this example that the first basis is set between the emitter and the receivers, and is ambiguous with respect to the relative phase phi. This transformation can be understood as a rotation of the Poincaré-sphere about the axis combining H and V. This remaining Poincaré-sphere transformation is adjusted in the manner that does not introduce an additional rotation of the H/V basis, by introducing only an additional relative variable phase between the basis vectors of the polarization basis used for the alignment in the first step. This can be achieved, for example using a tilted wave-plate, a quarter-wave-/half-wave/quarter-wave combination, a Soleil Babinet Compensator that introduces only a relative phase with respect to the H/V basis of the entangled photon source, or a polarizer or polarizing beam splitter in the receiver. In the case of a polarization-entangled photon source, this phase can also be absorbed into the phase of the entangled photon generation.

In the same way, the common reference frame can be set with any other entangled state taking the correlations or anti-correlations of the specific stats for any measurement basis into account.

The object of the invention is in addition achieved by a control device adapted to provide and capable of providing a method according to one the methods described above with one receiver, wherein the control device is connected with the first correction means and with the first detection means, and preferably with the local polarization reference means.

The object of the invention is in addition achieved by a control device adapted to provide and capable of providing a method according to one of the methods described above with two receivers, wherein the control device is connected with the first and/or second correction means and with the first and/or second detection means, and preferably with the local polarization reference means.

The object of the invention is in addition achieved by a computer device with a microprocessor with a nonvolatile memory, wherein the nonvolatile memory comprises an executable program in order to provide a method according to one of the methods described above, preferably wherein the computer device is the control device.

In the following, the invention will be explained by way of preferred embodiments illustrated in the drawings, yet without being restricted thereto. In the drawings:

Fig. 1a  schematic setup with an emitter and a receiver to provide a common polarization reference frame;

Fig. 1b  schematic setup with an emitter and two receivers to provide a common polarization reference frame;

Fig. 2a  first embodiment of the inventive correction means with a tilted wave-plate as second correction component;

Fig. 2b  second embodiment of the inventive correction means with a Babinet compensator as second correction component;

Fig. 2c  third embodiment of the inventive correction means with a first quarter-wave plate, a half wave-plate and a second quarter-wave plate as second correction component;

Fig. 3  a linear entangled photon source as an emitter and two receivers and two correction components in the transmission channels;

Fig. 4a  correction means in a free-space channel with a coupling means from a free-space in a fiber channel;

Fig. 4b  correction means in a fiber transmission channel with a coupling means from a free-space in a fiber channel;

Fig. 5  fiber transmission channel with a free-space receiver to measure in two non-orthogonal states;

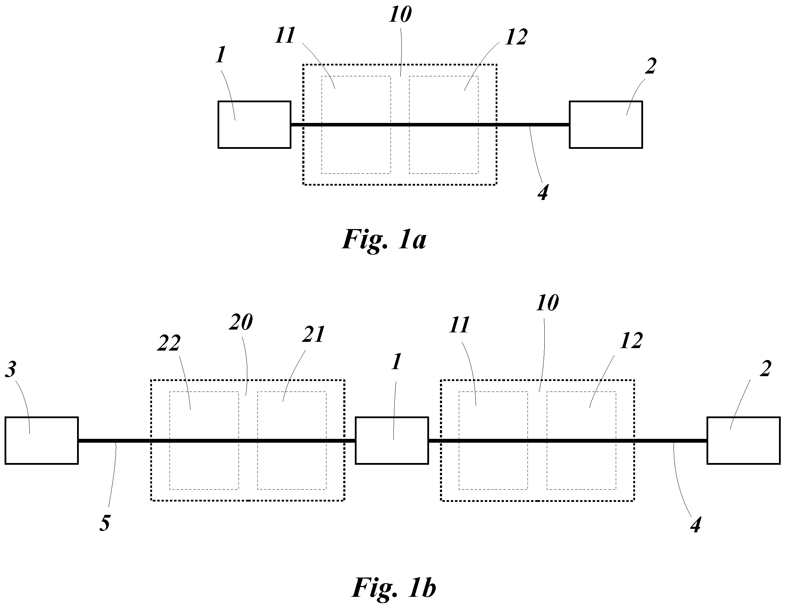

Fig. 1a shows a schematic setup for an emitter 1 connected via a first transmission means 4 with a first receiver 2. The emitter 1 produces polarized photons and sets a local polarized reference frame in at least two non-orthogonal or complementary polarization states. The polarized photons are transmitted in the first transmission means 4 to the first receiver 2. The first receiver 2 can measure the photons in at least two non-orthogonal polarization states. To set a common reference frame in the emitter 1 and the first receiver 2, a first correction means 10 is arranged in the first transmission means 4 to correct any unitary transformation of the polarization of the photons caused by the first transmission means 4. To compensate any unitary transformation in at least two non-orthogonal states, the first correction means 10 comprises a first correction component 11 and a second correction component 12. Both correction components 11 and 12 can be used independently to set the common reference frame in the emitter 1 and the first receiver 2 independently for the first and the second non-orthogonal state. For example, the first correction component 11 is used to set the first non-orthogonal state of the emitter 1 in the first receiver 2, and the second correction component 12 is used to set the second non-orthogonal state of the emitter 1 in the first receiver 2. With that, a simple two-step alignment method is possible that ensures complete alignment of the entire Poincaré-sphere from transmitter to receiver without the need for iterative alignment of two mutually unbiased measurement basis. The emitter 1 in Fig. 1a can be a laser with an optical element or any other component generating polarized photons in at least two non-orthogonal polarization states.

Fig. 1b shows a schematic setup for an emitter 1 connected via a first transmission means 4 with a first receiver 2 and via a second transmission means 5 with a second receiver 3. Fig. 1b differs from Fig. 1a only in that in the second transmission means 5, a second correction means 20 is arranged, comprising a first correction component 21 and a second correction component 22. The second correction means 20 is arranged in the second transmission means 5 to compensate any unitary transformation in at least two non-orthogonal states by the second transmission means 5. Both correction components 21 and 22 can be used independently to set the common reference frame in the emitter 1 and the second receiver 3 independently for the first and the second non-orthogonal state. The emitter 1 in Fig. 1b can be a laser with an optical element or any other component generating polarized photons in at least two non-orthogonal polarization states and a separation or switching component to transmit the photons to the first and/or the second receiver 2 and 3. It is also possible that the emitter 1 in Fig. 1b is an entangled photon source producing photon pairs entangled in the polarization. The first photon of each entangled photon pair is sent via the first transmission channel 4 to the first receiver 2 and the second photon of each entangled photon pair is sent via the second transmission channel 5 to the second receiver 3. In Fig. 1b, the simple two-step alignment method from Fig. 1a has to be performed for the first receiver 2 with the first correction means 10, and a second time for the second receiver 3 with the second correction means 20.

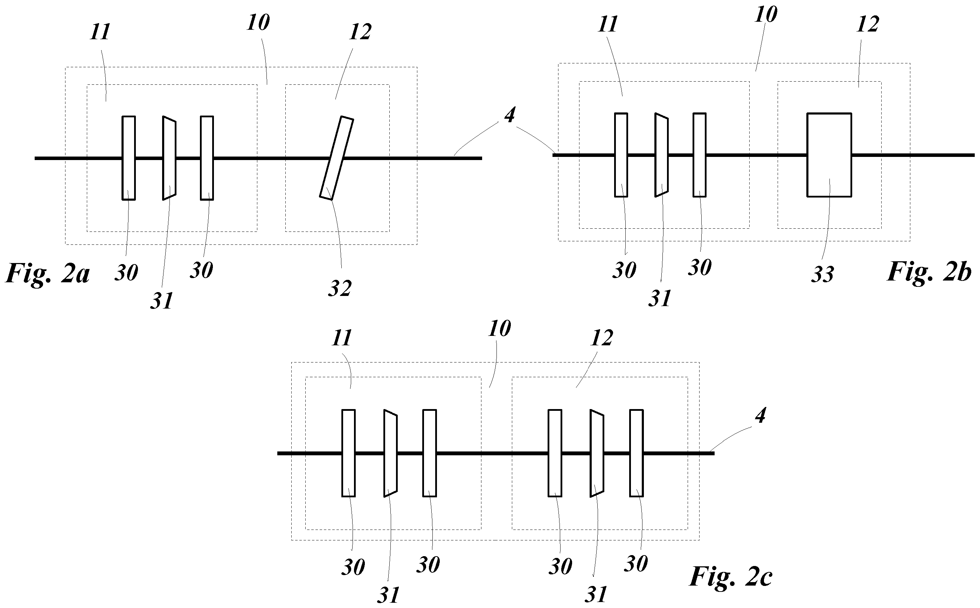

Fig. 2a shows a first inventive configuration of the first correction means 10 in the first transmission means 4. The first correction component 11 comprises a first quarter wave-plate 30, a half wave-plate 31, and a second quarter-wave plate 30. The second correction component comprises a tilted wave-plate 32. With the separate first and second correction components 11 and 12, the independent two-step alignment method can be performed to set a common reference frame between the emitter 1 and the receiver 2.

Fig. 2b shows a second inventive configuration of the correction means 10 in the first transmission means 4. This differs from Fig. 2a only in that the second correction component 12 comprises a Babinet compensator 33. Fig. 2c shows a third inventive configuration of the correction means 10 in the first transmission means 4. This differs from Fig. 2a only in that the second correction component 12 comprises a first quarter wave-plate 30, a half wave-plate 31, and a second quarter-wave plate 30. All inventive examples of the Fig. 2a to 2c can also be implemented as the second correction means 20. It is also possible to use a variable wave-plate as a second correction component 12.

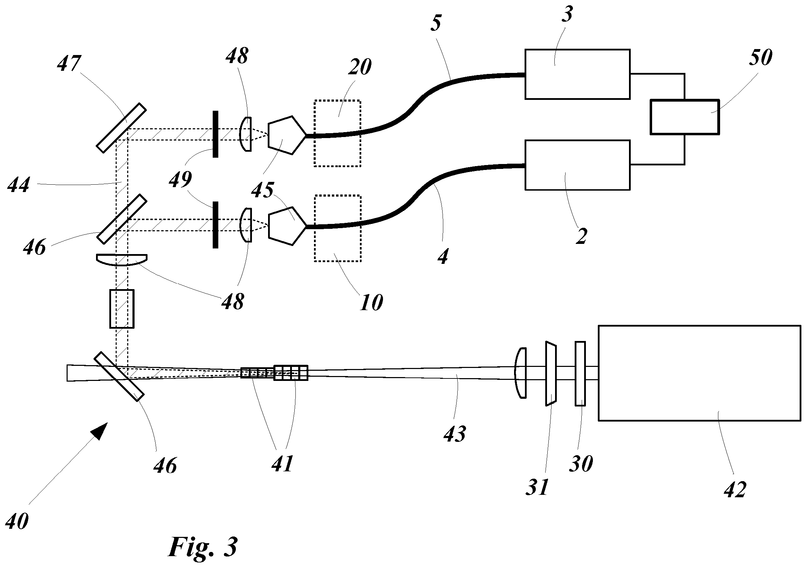

Fig. 3 shows a setup for providing a common reference frame between the emitter 1 and two receivers 2 and 3. In this inventive example, the emitter 1 is an entangled photon source 40, here as an example in a type-0 SPDC process, a high energy pump photon, emitted from a laser 42 on the first photon path 43 with polarization H, can produce a pair of photons HH with lower energy traveling on the second photon path 44 to coupling means 45. In this case, H denotes some particular optical axis with respect to the nonlinear photon pair source. Then, for example, by placing two down-converters, preferably crystals 41 with their optical axes rotated by 90 degrees in sequence and pumping this crossed crystal configuration pump photons in a superposition mode $|H\rangle + |V\rangle$ which can be adjusted by a half-wave plate 30 and a quarter-wave plate 31 behind the laser 42, a maximally polarization-entangled Bell state

$$|\Phi\rangle = \frac{1}{\sqrt{2}}\left(|H\rangle|H\rangle + e^{i\varphi}|V\rangle|V\rangle\right)$$ can be produced. The photons are guided by dichroic mirrors 46, mirrors 47, and lenses 48 to the coupling means 45 into the first and second transmission channels 4 and 5.

The two transmission channels 4 and 5 guide the photons to the first receiver 2, in the following called Alice, and to the second receiver 3, in the following called Bob. Alice 2 and Bob 3 each have a detection means, preferably a polarization analyzer that detects the polarization of single photons. The detection means, preferably the polarization analyzer can consist of a polarizing beam splitter cube and a number of wave-plates to perform polarization measurements for arbitrary polarization states, and is shown in detail in Fig. 6. The unique quantum feature of such entangled Bell states is that they also exhibit correlations in other measurement bases. In order to exploit the polarization correlations in quantum information processing, the photon pairs must be transmitted to distant measurement sites (Alice 2 and Bob 3). Since the transmission channel can introduce a transformation of the polarization reference frames, Alice 2 and Bob 3 and the entangled photon source 40 must set a common polarization reference frame to verify and exploit the nonlocal correlations present in the entangled state.

In this invention, a simple two-step alignment method is proposed that ensures complete alignment of the entire Poincaré-sphere from emitter 1, both receiver 2 and 3 without the need for iterative alignment of two mutually unbiased measurement basis. The alignment procedure comprises the following steps:

The entangled photon source is aligned and calibrated to produce a particular polarization-entangled state in the local reference frame, as defined for example by the axes of the non-linear crystal 41, or the Polarizing beam splitter in a Sagnac loop source of entangled photons. The polarization correlations that reflect a particular Bell state are then ensured in the local measurement basis. The measurements of theses polarization correlations are performed using calibrated thin film polarizers 49, inserted before the first and second transmission channels 4 and 5. For example, the maximally-entangled Phi+ state exhibits correlation in any measurement basis. Thus, in order to set this particular state, it is sufficient to ensure (I) the maximization of the detection of the H photons in the first receiver 2 and the maximization of the detection of the H photons in the second receiver 3, which, for example, can be realized when the joint detection probability for HV or VH coincidence detection of photon pairs is minimized, or the joint detection probability for HH or VV coincidence detection of photon pairs is maximized. The coincidence detection is the detection of two photons in the coincidence window. For that, the detectors (not shown in Fig. 3) send a signal, preferably an electrical signal to the coincidence logic 50, which counts a coincidence when two photons, one in each receiver 2 and 3, are detected at the same time, taking different distances and cable lengths into account. I.e., when the two thin film polarizers are in parallel, there should be a minimum of two-photon detection events registered by single-photon detectors located in the first and second receivers 2 and 3. This first step is realized for the emitter 1 and the first and second receivers 2 and 3, with the first correction component 11 of the first correction means 10 and/or the first correction component 21 of the second correction means 20.

Once this has been achieved with sufficient contrast between HV, VH, HH and VV, the local polarization measurements are changed to another measurement basis in the local reference frame. In the example of the Phi+ state, a maximum or minimum of two-photon detection events is also expected for measurements in a non-orthogonal state measurement basis. This can be achieved by changing the pump polarization, specifically the relative phase phi between the horizontal and vertical pump photon components (which drive the two SPDC possibilities). The alignment of the HV basis in step (I) has ensured that HV or VH coincidence detection of photon pairs is minimized, or the joint detection probability for HH or VV coincidence detection of photon pairs is maximized, and is ambiguous with respect to the relative phase phi. This transformation can be understood as a rotation of the Poincaré-sphere about the axis combining H and V. This remaining Poincaré-sphere transformation is adjusted in a manner that does not introduce an additional rotation of the HV basis, by introducing only an additional relative variable phase between the basis vectors of the polarization basis used for the alignment in step (I). This can be achieved by the second correction component 12 of the first correction means 10 and/or the second correction 22 of the second correction means 20, for example by first quarter wave-plate 30, a half wave-plate 31, and a second quarter-wave plate 30, or a tilted wave-plate 32, or a Soleil Babinet Compensator that introduces only a relative phase with respect to the HV basis of either the entangled photon source (non-linear crystal axis), or the polarizing beam splitter of the detection means. In the case of a polarization-entangled photon source, this phase can also be absorbed into the phase of the entangled photon generation.

As an emitter 1, an entangled photon source in Sagnac configuration is also possible. These entangled photon sources are well known.

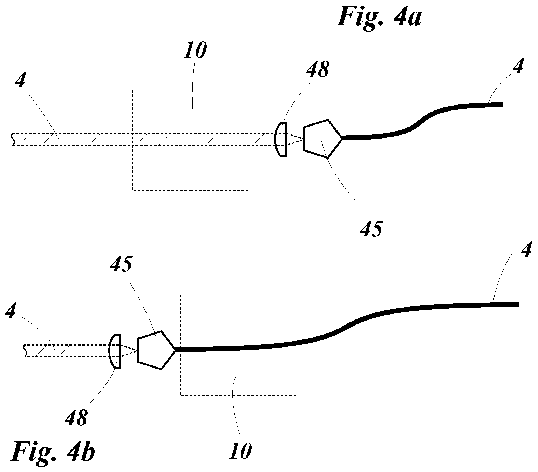

Fig. 4 shows different positions of the correction means 10 for a first transmission channel 4, comprising a free-space transmission section and a fiber transmission section connected via a coupling means 45. The correction means 10 can be arranged in the free-space transmission section (Fig. 4a) or in the fiber transmission section (Fig. 4b).

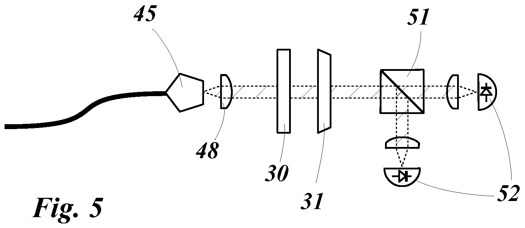

Fig. 5 shows a possible variant of a detection means, preferably a polarization analyzer for a first and/or second receiver 2 and/or 3. It can consist of a polarizing beam splitter 51, a half-wave plate 30, and a quarter-wave plate 31 to perform polarization measurements for arbitrary polarization states.

Reference signs

1    emitter
2    first receiver
3    second receiver
4    first transmission means
5    second transmission means

10    first correction means
11    first correction component of the first correction means
12    second correction component of the first correction means

20    second correction means
21    first correction component of the second correction means
22    second correction component of the second correction means

30    half-wave plate
31    quarter-wave plate
32    tilted wave plate
33    Babinet compensator
40    entangled photon source
41    crystal
42    laser
43    first photon path
44    second photon path
45    coupling means
46    dichroic mirrors
47    mirrors
48    lens
49    polarizer
50    coincidence logic
51    polarizing beam splitter
52    detector

**Claims**

1.    A method to provide an emitter (1) and a receiver (2) with a common polarization reference frame

wherein the emitter (1) comprises a source to produce polarized photons in at least two non-orthogonal polarizations,
wherein the receiver (2) comprises a detection means to determine the polarization of the polarized photons in at least two non-orthogonal polarization states,

wherein the emitter (1) and receiver (2) are connected via an optical channel, wherein the optical channel comprises a transmission means (4) to guide the polarized photons from the emitter to the receiver, and a first correction means (10) to correct any unitary transformation of the polarization of the photons caused by the optical channel,

wherein the first correction means (10) consists of a first correction component (11) and a second correction component (12), wherein the first and second correction components (11, 12) are separate components,

wherein the method comprises the steps of

I) providing a local polarization reference frame with a local polarization reference means in the emitter (1) with at least two non-orthogonal polarization states, a first local polarization reference state and a second local polarization reference state,

II) performing one or more calibration steps by adjusting the first correction component (11) of the correction means (10) and maximization and/or minimization of the detected photons in the detection means in the receiver in the first reference polarization state, in order to set the first local polarization reference state in the receiver,

III) performing one or more calibration steps by adjusting the second correction component (12) of the correction means (10) and maximization and/or minimization of the detected photons in the detection means in the receiver in the second reference polarization state in order to set the second local polarization reference state in the receiver.

2. Method according to claim 1,
wherein the first and/or the second correction component (11, 12) of the first correction means (10) comprises a variable wave-plate, or a tilted wave-plate, or a soleil Babinet compensator, or a combination of a first quarter wave-plate, a half wave-plate, and a second quarter-wave plate, or a fiber controller creating the behavior of a first quarter wave-plate, a half wave-plate, and a second quarter-wave plate by a first, second, and third spools of the fiber, or a rotatable fiber squeezer.

3. Method according to one of the claims 1 or 2,
wherein the local polarization reference means comprises one of a polarizing means, or a polarizing beam splitter, or a polarizer, or down converted photons, or a non-linear crystal, or a laser producing polarized photons.

4. A method to provide an emitter (1) and two receivers (2, 3) with a common polarization reference frame,

wherein the emitter (1) is a laser (42) or a photon source producing polarized photons in at least two non-orthogonal polarizations, and

wherein the first receiver (2) comprises a first detection means to determine the polarization of the polarized photons in at least two non-orthogonal polarization states and the second receiver (3) comprises a second detection means to determine the polarization of the polarized photons in at least two non-orthogonal polarization states, and

wherein a first optical channel is connecting the emitter and the first receiver, comprising a first transmission means (4) to guide the polarized photons from the emitter (1) to the first receiver (2), and a second optical channel is connecting the emitter (1) and the second receiver (3), comprising a second transmission means (5) to guide the polarized photons from the emitter (1) to the second receiver (3), and

wherein the first optical channel comprises a first correction means (10) to correct any unitary transformation of the polarization of the photons caused by the first optical channel, and/or wherein the second optical channel comprises a second correction means (20) to correct any unitary transformation of the polarization of the photons caused by the second optical channel, and wherein the first and/or second correction means (10, 20) each consist respectively of a first correction component (11, 21) and a second correction component (12, 22), and

wherein the emitter (1) sends polarized photons in the first optical channel to the first receiver (2) and in the second optical channel to the second receiver (3),

wherein the calibration of the common polarization reference frame between the emitter (1) and the first and/or second receiver (2, 3), or between the first and the second receiver (2, 3) is according to one of the claims 1 to 3.

5. Method according to claim 4,

wherein the photon source is an entangled photon source producing polarization entangled photon pairs,

wherein one photon of each entangled photon pair is sent in the first optical channel to the first receiver (2) and the second photon of each entangled photon pair is sent in the second optical channel to the second receiver (3).

**6.** Method according to claim 5, wherein the method comprises the further steps of

IV) performing one or more calibration steps by adjusting the first correction component (11, 21) of the first and/or second correction means (10, 20) and maximization and/or minimization of the correlations of the entangled photon pairs in the first emitter polarization state in order to set the first local polarization state in the first and/or second receiver, and/or

V) performing one or more calibration steps by adjusting the second correction component (12, 22) of the first and/or second correction means (10, 20) and maximization and/or minimization of the correlations of the entangled photon pairs in the second emitter polarization state in order to set the second local polarization state in the first and/or second receiver.

**7.** A method to provide an emitter (1) and two receivers (2, 3) with a common polarization reference frame,

wherein the emitter (1) is an entangled photon source producing polarization entangled photon pairs, and

wherein the first receiver (2) comprises a first detection means to determine the polarization of the polarized photons in at least two non-orthogonal polarization states and the second receiver (3) comprises a second detection means to determine the polarization of the polarized photons in at least two non-orthogonal polarization states, and

wherein a first optical channel, connecting the emitter (1) and the first receiver (2), comprising a first transmission means (4) to guide the polarized photons from the emitter (1) to the first receiver (2), and a second optical channel, connecting the emitter (1) and the second receiver (3), comprising a second transmission means (5) to guide the polarized photons from the emitter (1) to the second receiver (3), and

wherein one photon of each entangled photon pair is sent in the first optical channel to the first receiver (2) and the second photon of each entangled photon pair is sent in the second optical channel to the second receiver (3), and

wherein the first optical channel comprises a first correction means (10) to correct any unitary transformation of the polarization of the photons caused by the first optical channel, and/or wherein the second optical channel comprises a second correction means (20) to correct any unitary transformation of the polarization of the photons caused by the second optical channel, and/or wherein the emitter (1) comprises a first and/or second correction means (10, 20) to correct any unitary transformation of the polarization of the photons caused by the first and/or second optical channel and

wherein the first and/or second correction means (10, 20) each consist respectively of a first correction component (11, 21) and a second correction component (12, 22), and

wherein the calibration of the common polarization reference frame between the emitter (1) and the first and/or second receiver (2, 3) or between the first and the second receiver is according to the steps

I) providing a local polarization reference frame with a local polarization reference means in the emitter with at least two non-orthogonal polarization states, a first local polarization reference state and a second local polarization reference state,

II) performing one or more calibration steps by adjusting the first correction component (11, 21) of the first and/or second correction means (10, 20) and maximization and/or minimization of the correlations of the entangled photon pairs in both receivers in the first local polarization reference state, in order to set the first local polarization reference state in the first and/or second receiver,

III) performing one or more calibration steps by adjusting the second correction component (12, 22) of the first and/or second correction means (10, 20) and maximization and/or minimization of the detection of the correlations of the entangled photon pairs in both receivers in the second local polarization reference state, in order to set the second local polarization reference state the in first and/or second receiver.

**8.** A method according to claim 7, wherein the first and/or the second correction component (11, 12, 21, 22) of the first and/or the second correction means (10, 20) comprises a variable wave-plate, or a tilted wave-plate, or a soleil Babinet compensator, or a combination of a first quarter wave-plate, a half wave-plate, and a second quarter-wave plate, or a fiber controller creating the behavior of a first quarter wave-plate, a half wave-plate, and a second quarter-wave plate by a first, second, and third spools of the fiber, or a rotatable fiber squeezer in the fiber or is realized by changing the pump polarization of the entangled photon source.

**9.** A method according to one of the claims 7 or 8, wherein the local polarization reference means comprises one of a polarizing means, or a polarizing beam splitter, or a polarizer, or down converted photons, or a non-linear crystal.

10. Control device adapted to provide a method according to one of the claims 1 to 3, wherein the control device is connected with the first correction means (10) and with the first detection means, and preferably with the local polarization reference means.

11. Control device adapted to provide a method according to one of the claims 4 to 9, wherein the control device is connected with the first and/or second correction means (10, 20) and with the first and/or second detection means, and preferably with the local polarization reference means.

12. Computer device with a microprocessor with a nonvolatile memory, wherein the nonvolatile memory comprises an executable program in order to provide a method according to one of the claims 1 to 9, preferably wherein the computer device is the control device according to one of the claims 10 or 11.

13. An apparatus comprising an emitter (1) and one receiver (2) with a common polarization reference frame in at least two non-orthogonal polarization states, wherein the emitter (1) comprises a source to produce polarized photons in at least two non-orthogonal polarizations adapted to perform step I) according to one of the claims 1 to 3, and

> wherein the receiver (2) comprises a detection means to determine the polarization of the polarized photons in at least two non-orthogonal polarization states, and
> wherein the emitter (1) and receiver (2) are connected via an optical channel comprising a transmission means (4) to guide the polarized photons from the emitter to the receiver, and a first correction means to correct any unitary transformation of the polarization of the photons caused by the optical channel, and
> wherein the first correction means consists of at least two separate components, a first correction component adapted to perform step II) according to one of the claims 1 to 3 and a second correction component adapted to perform step III) according to one of the claims 1 to 3.

14. An apparatus comprising an emitter (1) and two receivers (2, 3) with a common polarization reference frame in at least two non-orthogonal polarization states, wherein the emitter (1) comprises a laser (42) or a photon source producing polarized photons in at least two non-orthogonal polarizations adapted to perform step I) according to one of the claims 4 to 9, and wherein the first receiver (2) comprises a first detection means to determine the polarization of the polarized photons in at least two non-orthogonal polarization states and the second receiver (3) comprises a second detection means to determine the polarization of the polarized photons in at least two non-orthogonal polarization states, wherein the laser (42) or the photon source and the first receiver (2) are connected via a first optical channel comprising a first transmission means (4) to guide the polarized photons from the emitter (1) to the first receiver (2), and a first correction means (10) to correct any unitary transformation of the polarization of the photons caused by the first optical channel, and wherein the laser (42) or the photon source and the second receiver (3) are connected via a second optical channel comprising a second transmission means (5) to guide the polarized photons from the emitter (1) to the second receiver (3), and a second correction (20) means to correct any unitary transformation of the polarization of the photons caused by the second optical channel, wherein the emitter (1) sends polarized photons in the first optical channel to the first receiver (2) and in the second optical channel to the second receiver (3), wherein the first and/or second correction means (10, 20) consists respectively of a first correction component (11, 21) adapted to perform step II) according to one of the claims 4 to 9, and a second correction component (12, 22) adapted to perform step III) according to one of the claims 4 to 9.

15. An apparatus comprising an emitter (1) and two receivers (2, 3) with a common polarization reference frame in at least two non-orthogonal polarization states,

> wherein the emitter (1) comprises an entangled photon source adapted to perform step I) according to one of the claims 4 to 9, and
> wherein the first receiver (2) comprises a first detection means to determine the polarization of the polarized photons in at least two non-orthogonal polarization states and the second receiver (3) comprises a second detection means to determine the polarization of the polarized photons in at least two non-orthogonal polarization stats, and a first optical channel, connecting the emitter (1) and the first receiver (2), comprising a first transmission means (4) to guide the polarized photons from the emitter (1) to the first receiver (2), and a second optical channel, connecting the emitter (1) and the second receiver (3), comprising a second transmission means to guide the polarized photons from the emitter (1) to the second receiver (3), and
> wherein one photon of each entangled photon pair is sent in the first optical channel to the first receiver (2) and the second photon of each entangled photon pair is sent in the second optical channel to the second receiver (3), wherein the first optical channel comprises a first correction means (10) to correct any unitary transformation of the polarization of the photons caused by the first optical channel, and/or wherein the second optical channel comprises a second correction means (20) to correct any unitary transformation of the polarization of the photons caused by the second optical channel, and/or wherein the emitter (1) comprises a first and/or second correction means (10, 20) to correct any unitary transformation of the polarization of the photons caused by the first and/or second optical channel and wherein the first and/or second correction means (10, 20) each consist respectively of a first correction component (11, 21) adapted to perform step II) according to one of the claims 4 to 9, and a second correction component (12, 22) adapted to perform step III) according to one of the claims 4 to 9.

**Patentansprüche**

1. Verfahren zum Bereitstellen eines Emitters (1) und eines Empfängers (2) mit einem gemeinsamen Polarisationsreferenzrahmen,

wobei der Emitter (1) eine Quelle zur Erzeugung von polarisierten Photonen in mindestens zwei nicht-orthogonalen Polarisationen umfasst, wobei der Empfänger (2) ein Detektionsmittel zur Bestimmung der Polarisation der polarisierten Photonen in mindestens zwei nicht-orthogonalen Polarisationszuständen umfasst, wobei der Emitter (1) und der Empfänger (2) über einen optischen Kanal verbunden sind, wobei der optische Kanal ein Übertragungsmittel (4) umfasst, um die polarisierten Photonen vom Emitter zum Empfänger zu leiten, und eine erste Korrektureinrichtung (10), um jede durch den optischen Kanal verursachte unitäre Transformation der Polarisation der Photonen zu korrigieren, wobei die erste Korrektureinrichtung (10) aus einer ersten Korrekturkomponente (11) und einer zweiten Korrekturkomponente (12) besteht, wobei die erste und die zweite Korrekturkomponente (11, 12) separate Komponenten sind, wobei das Verfahren die Schritte umfasst:

I) Bereitstellen eines lokalen Polarisationsreferenzrahmens mit einem lokalen Polarisationsreferenzmittel in dem Emitter (1) mit mindestens zwei nicht orthogonalen Polarisationszuständen, einem ersten lokalen Polarisationsreferenzzustand und einem zweiten lokalen Polarisationsreferenzzustand,
II) Durchführen eines oder mehrerer Kalibrierungsschritte durch Anpassen der ersten Korrekturkomponente (11) der Korrektureinrichtung (10) und Maximieren und/oder Minimieren der detektierten Photonen in den Detektionsmitteln in dem Empfänger in dem ersten Referenzpolarisationszustand, um den ersten lokalen Polarisationsreferenzzustand in dem Empfänger einzustellen,
III) Durchführen eines oder mehrerer Kalibrierungsschritte durch Anpassen der zweiten Korrekturkomponente (12) der Korrektureinrichtung (10) und Maximieren und/oder Minimieren der detektierten Photonen in den Detektionsmitteln in dem Empfänger in dem zweiten Referenzpolarisationszustand, um den zweiten lokalen Polarisationsreferenzzustand in dem Empfänger einzustellen.

2. Verfahren nach Anspruch 1, wobei die erste und/oder die zweite Korrekturkomponente (11, 12) der ersten Korrektureinrichtung (10) eine variable Wellenplatte oder eine gekippte Wellenplatte oder einen Soleil-Babinet-Kompensator oder eine Kombination aus einem ersten $\lambda/4$-Plättchen, einem $\lambda/2$-Plättchenund einem zweiten $\lambda/4$-Plättchenoder eine Fasersteuerung, die das Verhalten eines ersten $\lambda/4$-Plättchens, eines $\lambda/2$-Plättchens und eines zweiten $\lambda/4$-Plättchensdurch eine erste, zweite und dritte Spule der Faser erzeugt, oder einen drehbaren Faserquetscher umfasst.

3. Verfahren nach einem der Ansprüche 1 oder 2, wobei das lokale Polarisationsreferenzmittel eines der folgenden Mittel umfasst: ein polarisierendes Mittel oder einen polarisierenden Strahlteiler oder einen Polarisator oder abwärts konvertierte Photonen oder einen nicht-linearen Kristall oder einen Laser, der polarisierte Photonen erzeugt.

4. Verfahren zum Bereitstellen eines Emitters (1) und zweier Empfänger (2, 3) mit einem gemeinsamen Polarisationsreferenzrahmen,

wobei der Emitter (1) ein Laser (42) oder eine Photonenquelle zur Erzeugung von polarisierten Photonen in mindestens zwei nicht-orthogonalen Polarisationen ist, und wobei der erste Empfänger (2) ein erstes Detektionsmittel umfasst, um die Polarisation der polarisierten Photonen in mindestens zwei nicht-orthogonalen Polarisationszuständen zu bestimmen, und der zweite Empfänger (3) ein zweites Detektionsmittel umfasst, um die Polarisation der polarisierten Photonen in mindestens zwei nicht-orthogonalen Polarisationszuständen zu bestimmen, und

wobei ein erster optischer Kanal den Emitter und den ersten Empfänger verbindet, wobei er ein erstes Übertragungsmittel (4) umfasst, um die polarisierten Photonen von dem Emitter (1) zu dem ersten Empfänger (2) zu leiten, und wobei ein zweiter optischer Kanal den Emitter (1) und den zweiten Empfänger (3) verbindet, wobei er ein zweites Übertragungsmittel (5) umfasst, um die polarisierten Photonen von dem Emitter (1) zu dem zweiten Empfänger (3) zu leiten, und

wobei der erste optische Kanal eine erste Korrektureinrichtung (10) umfasst, um jede durch den ersten optischen Kanal verursachte unitäre Transformation der Polarisation der Photonen zu korrigieren, und/oder wobei der zweite optische Kanal eine zweite Korrektureinrichtung (20) umfasst, um jede durch den zweiten optischen Kanal verursachte unitäre Transformation der Polarisation der Photonen zu korrigieren, und

wobei die erste und/oder zweite Korrektureinrichtung (10, 20) jeweils aus einer ersten Korrekturkomponente (11, 21) und einer zweiten Korrekturkomponente (12, 22) besteht, und

wobei der Emitter (1) polarisierte Photonen in dem ersten optischen Kanal zu dem ersten Empfänger (2) und in dem zweiten optischen Kanal zu dem zweiten Empfänger (3) sendet, wobei die Kalibrierung des gemeinsamen Polarisationsreferenzrahmens zwischen dem Emitter (1) und dem ersten und/oder zweiten Empfänger (2, 3) oder zwischen dem ersten und dem zweiten Empfänger (2, 3) nach einem der Ansprüche 1 bis 3 erfolgt.

5. Verfahren nach Anspruch 4,

wobei die Photonenquelle eine verschränkte Photonenquelle ist, die polarisationsverschränkte Photonenpaare erzeugt,

wobei ein Photon jedes verschränkten Photonenpaares über den ersten optischen Kanal an den ersten Empfänger (2) und das zweite Photon jedes verschränkten Photonenpaares über den zweiten optischen Kanal an den zweiten Empfänger (3) gesendet wird.

6. Verfahren nach Anspruch 5, wobei das Verfahren die folgenden weiteren Schritte umfasst:

IV) Durchführen eines oder mehrerer Kalibrierungsschritte durch Anpassen der ersten Korrekturkomponente (11, 21) der ersten und/oder zweiten Korrektureinrichtung (10, 20) und Maximieren und/oder Minimieren der Korrelationen der verschränkten Photonenpaare im ersten Emitterpolarisationszustand, um den ersten lokalen Polarisationszustand im ersten und/oder zweiten Empfänger einzustellen, und/oder

V) Durchführen eines oder mehrerer Kalibrierungsschritte durch Anpassen der zweiten Korrekturkomponente (12, 22) der ersten und/oder zweiten Korrektureinrichtung (10, 20) und Maximieren und/oder Minimieren der Korrelationen der verschränkten Photonenpaare im zweiten Emitterpolarisationszustand, um den zweiten lokalen Polarisationszustand im ersten und/oder zweiten Empfänger einzustellen.

7. Verfahren zum Bereitstellen eines Emitters (1) und zweier Empfänger (2, 3) mit einem gemeinsamen Polarisationsreferenzrahmen,

wobei der Emitter (1) eine verschränkte Photonenquelle ist, die polarisationsverschränkte Photonenpaare erzeugt, und

wobei der erste Empfänger (2) ein erstes Detektionsmittel umfasst, um die Polarisation der polarisierten Photonen in mindestens zwei nicht-orthogonalen Polarisationszuständen zu bestimmen, und der zweite Empfänger (3) ein zweites Detektionsmittel umfasst, um die Polarisation der polarisierten Photonen in mindestens zwei nicht-orthogonalen Polarisationszuständen zu bestimmen, und

wobei ein erster optischer Kanal, der den Emitter (1) und den ersten Empfänger (2) verbindet, ein erstes Übertragungsmittel (4) umfasst, um die polarisierten Photonen von dem Emitter (1) zu dem ersten Empfänger (2) zu leiten, und ein zweiter optischer Kanal, der den Emitter (1) und den zweiten Empfänger (3) verbindet, ein zweites Übertragungsmittel (5) umfasst, um die polarisierten Photonen von dem Emitter (1) zu dem zweiten Empfänger (3) zu leiten, und

wobei ein Photon jedes verschränkten Photonenpaares in dem ersten optischen Kanal zu dem ersten Empfänger (2) und das zweite Photon jedes verschränkten Photonenpaares in dem zweiten optischen Kanal zu dem zweiten Empfänger (3) gesendet wird, und

wobei der erste optische Kanal eine erste Korrektureinrichtung (10) umfasst, um jede durch den ersten optischen Kanal verursachte unitäre Transformation der Polarisation der Photonen zu korrigieren, und/oder wobei der zweite optische Kanal eine zweite Korrektureinrichtung (20) umfasst, um jede durch den zweiten optischen Kanal verursachte unitäre Transformation der Polarisation der Photonen zu korrigieren, und/oder

wobei der Emitter (1) eine erste und/oder zweite Korrektureinrichtung (10, 20) umfasst, um jede unitäre Transformation der Polarisation der Photonen zu korrigieren, die durch den ersten und/oder zweiten optischen Kanal verursacht wird, und

wobei die erste und/oder zweite Korrektureinrichtung (10, 20) jeweils aus einer ersten Korrekturkomponente (11, 21) und einer zweiten Korrekturkomponente (12, 22) besteht, und

wobei die Kalibrierung des gemeinsamen Polarisationsreferenzrahmens zwischen dem Emitter (1) und dem ersten und/oder zweiten Empfänger (2, 3) oder zwischen dem ersten und dem zweiten Empfänger gemäß den folgenden Schritten erfolgt

I) Bereitstellung eines lokalen Polarisationsreferenzrahmens mit einem lokalen Polarisationsreferenzmittel im Emitter mit mindestens zwei nicht-orthogonalen Polarisationszuständen, einem ersten lokalen Polarisationsreferenzzustand und einem zweiten lokalen Polarisationsreferenzzustand,

II) Durchführen eines oder mehrerer Kalibrierungsschritte durch Anpassen der ersten Korrekturkomponente (11, 21) der ersten und/oder zweiten Korrektureinrichtung (10, 20) und Maximieren und/oder Minimieren der Korrelationen der verschränkten Photonenpaare in beiden Empfängern in dem ersten lokalen Polarisationsreferenzzustand, um den ersten lokalen Polarisationsreferenzzustand in dem ersten und/oder zweiten Empfänger einzustellen,

III) Durchführen eines oder mehrerer Kalibrierungsschritte durch Anpassen der zweiten Korrekturkomponente (12, 22) der ersten und/oder zweiten Korrektureinrichtung (10, 20) und Maximieren und/oder Minimieren der Erfassung der Korrelationen der verschränkten Photonenpaare in beiden Empfängern in dem zweiten lokalen Polarisationsreferenzzustand, um den zweiten lokalen Polarisationsreferenzzustand in dem ersten und/oder zweiten Empfänger einzustellen.

8. Verfahren nach Anspruch 7,
wobei die erste und/oder die zweite Korrekturkomponente (11, 12, 21, 22) der ersten und/oder der zweiten Korrektureinrichtung (10, 20) eine variable Wellenplatte oder eine gekippte Wellenplatte oder einen Soleil-Babinet-Kompensator oder eine Kombination aus einem ersten $\lambda/4$-Plättchen, einem $\lambda/2$-Plättchenund einem zweiten $\lambda/4$-Plättchen, oder eine Fasersteuerung, die das Verhalten eines ersten $\lambda/4$-Plättchens, eines $\lambda/2$-Plättchensund eines zweiten $\lambda/4$-Plättchensdurch eine erste, zweite und dritte Spule der Faser erzeugt, oder einen drehbaren Faserquetscher in der Faser umfasst oder durch Ändern der Pumppolarisation der verschränkten Photonenquelle realisiert wird.

9. Verfahren nach einem der Ansprüche 7 oder 8, wobei das lokale Polarisationsreferenzmittel entweder ein polarisierendes Mittel oder einen polarisierenden Strahlteiler oder einen Polarisator oder abwärts konvertierte Photonen oder einen nicht-linearen Kristall umfasst.

10. Steuervorrichtung geeignet zum Bereitstellen eines Verfahrens nach einem der Ansprüche 1 bis 3, wobei die Steuervorrichtung mit der ersten Korrektureinrichtung (10) und mit dem ersten Detektionsmittel und vorzugsweise mit dem lokalen Polarisationsreferenzmittel verbunden ist.

11. Steuervorrichtung geeignet zum Bereitstellen eines Verfahrens nach einem der Ansprüche 4 bis 9, wobei die Steuervorrichtung mit der ersten und/oder zweiten Korrektureinrichtung (10, 20) und mit dem ersten und/oder zweiten Detektionsmittel und vorzugsweise mit dem lokalen Polarisationsreferenzmittel verbunden ist.

12. Computervorrichtung mit einem Mikroprozessor mit einem nichtflüchtigen Speicher, wobei der nichtflüchtige Speicher ein ausführbares Programm umfasst, um ein Verfahren nach einem der Ansprüche 1 bis 9 bereitzustellen, wobei die Computervorrichtung vorzugsweise die Steuervorrichtung nach einem der Ansprüche 10 oder 11 ist.

13. Vorrichtung mit einem Emitter (1) und einem Empfänger (2) mit einem gemeinsamen Polarisationsreferenzrahmen in mindestens zwei nicht-orthogonalen Polarisationszuständen,

wobei der Emitter (1) eine Quelle zur Erzeugung von polarisierten Photonen in mindestens zwei nicht-orthogonalen Polarisationen umfasst, geeignet zur Durchführung von Schritt I) nach einem der Ansprüche 1 bis 3, und

wobei der Empfänger (2) ein Detektionsmittel umfasst, um die Polarisation der polarisierten Photonen in mindestens zwei nicht-orthogonalen Polarisationszuständen zu bestimmen, und

wobei der Emitter (1) und der Empfänger (2) über einen optischen Kanal verbunden sind, der ein Übertragungsmittel (4) umfasst, um die polarisierten Photonen vom Emitter zum Empfänger zu leiten, und eine erste Korrektureinrichtung, um jede durch den optischen Kanal verursachte unitäre Transformation der Polarisation der Photonen zu korrigieren, und wobei die erste Korrektureinrichtung aus mindestens zwei separaten Komponenten besteht, einer ersten Korrekturkomponente, die zur Durchführung von Schritt II) nach einem der Ansprüche 1 bis 3 geeignet ist, und einer zweiten Korrekturkomponente, die zur Durchführung von Schritt III) nach einem der Ansprüche 1 bis 3 geeignet ist.

14. Vorrichtung umfassend einen Emitter (1) und zwei Empfängern (2, 3) mit einem gemeinsamen Polarisationsreferenzrahmen in mindestens zwei nicht-orthogonalen Polarisationszuständen,

> wobei der Emitter (1) einen Laser (42) oder eine Photonenquelle zur Erzeugung von polarisierten Photonen in mindestens zwei nicht-orthogonalen Polarisationen umfasst, die geeignet sind, Schritt I) nach einem der Ansprüche 4 bis 9 durchzuführen, und
> wobei der erste Empfänger (2) ein erstes Detektionsmittel umfasst, um die Polarisation der polarisierten Photonen in mindestens zwei nicht-orthogonalen Polarisationszuständen zu bestimmen, und der zweite Empfänger (3) ein zweites Detektionsmittel umfasst, um die Polarisation der polarisierten Photonen in mindestens zwei nicht-orthogonalen Polarisationszuständen zu bestimmen, wobei der Laser (42) oder die Photonenquelle und der erste Empfänger (2) über einen ersten optischen Kanal verbunden sind, der ein erstes Übertragungsmittel (4) umfasst, um die polarisierten Photonen vom Emitter (1) zum ersten Empfänger (2) zu leiten, und eine erste Korrektureinrichtung (10), um jede durch den ersten optischen Kanal verursachte unitäre Transformation der Polarisation der Photonen zu korrigieren, und wobei der Laser (42) oder die Photonenquelle und der zweite Empfänger (3) über einen zweiten optischen Kanal verbunden sind, der ein zweites Übertragungsmittel (5) umfasst, um die polarisierten Photonen vom Emitter (1) zum zweiten Empfänger (3) zu leiten, und eine zweite Korrektureinrichtung (20), um jede durch den zweiten optischen Kanal verursachte unitäre Transformation der Polarisation der Photonen zu korrigieren, wobei der Emitter (1) polarisierte Photonen in dem ersten optischen Kanal zu dem ersten Empfänger (2) und in dem zweiten optischen Kanal zu dem zweiten Empfänger (3) sendet, wobei die erste und/oder zweite Korrektureinrichtung (10, 20) jeweils aus einer ersten Korrekturkomponente (11, 21), die geeignet ist, Schritt II) gemäß einem der Ansprüche 4 bis 9 durchzuführen, und einer zweiten Korrekturkomponente (12, 22), die geeignet ist, Schritt III) gemäß einem der Ansprüche 4 bis 9 durchzuführen, besteht.

15. Vorrichtung umfassend einen Emitter (1) und zwei Empfängern (2, 3) mit einem gemeinsamen Polarisationsreferenzrahmen in mindestens zwei nicht-orthogonalen Polarisationszuständen,

> wobei der Emitter (1) eine verschränkte Photonenquelle umfasst, die geeignet ist, Schritt I) nach einem der Ansprüche 4 bis 9 auszuführen, und
> wobei der erste Empfänger (2) ein erstes Detektionsmittel umfasst, um die Polarisation der polarisierten Photonen in mindestens zwei nicht-orthogonalen Polarisationszuständen zu bestimmen, und der zweite Empfänger (3) ein zweites Detektionsmittel umfasst, um die Polarisation der polarisierten Photonen in mindestens zwei nicht-orthogonalen Polarisationszuständen zu bestimmen, und einen ersten optischen Kanal, der den Emitter (1) und den ersten Empfänger (2) verbindet, umfassend ein erstes Übertragungsmittel (4), um die polarisierten Photonen vom Emitter (1) zum ersten Empfänger (2) zu leiten, und einen zweiten optischen Kanal, der den Emitter (1) und den zweiten Empfänger (3) verbindet, umfassend ein zweites Übertragungsmittel, um die polarisierten Photonen vom Emitter (1) zum zweiten Empfänger (3) zu leiten, und
> wobei ein Photon jedes verschränkten Photonenpaares über den ersten optischen Kanal an den ersten Empfänger (2) und das zweite Photon jedes verschränkten Photonenpaares über den zweiten optischen Kanal an den zweiten Empfänger (3) gesendet wird,
> wobei der erste optische Kanal eine erste Korrektureinrichtung (10) umfasst, um jede durch den ersten optischen Kanal verursachte unitäre Transformation der Polarisation der Photonen zu korrigieren, und/oder
> wobei der zweite optische Kanal eine zweite Korrektureinrichtung (20) umfasst, um jede durch den zweiten optischen Kanal verursachte unitäre Transformation der Polarisation der Photonen zu korrigieren, und/oder wobei der Emitter (1) eine erste und/oder zweite Korrektureinrichtung (10, 20) umfasst, um jede unitäre Transformation der Polarisation der Photonen zu korrigieren, die durch den ersten und/oder zweiten optischen Kanal verursacht wird, und wobei die erste und/oder zweite Korrektureinrichtung (10, 20) jeweils aus einer ersten Korrekturkomponente (11, 21), die zur Durchführung von Schritt II) nach einem der Ansprüche 4 bis 9 geeignet ist, und einer zweiten Korrekturkomponente (12, 22), die zur Durchführung von Schritt III) nach einem der Ansprüche 4 bis 9 geeignet ist, bestehen.

## Revendications

1. Procédé pour fournir un émetteur (1) et un récepteur (2) avec un cadre de référence de polarisation commun,

dans lequel l'émetteur (1) comprend une source pour produire des photons polarisés dans au moins deux polarisations non orthogonales, dans lequel le récepteur (2) comprend un moyen de détection pour déterminer la polarisation des photons polarisés dans au moins deux états de polarisation non orthogonaux, dans lequel l'émetteur (1) et le récepteur (2) sont reliés par un canal optique, dans lequel le canal optique comprend un moyen de transmission (4) pour guider les photons polarisés de l'émetteur au récepteur, et un premier moyen de correction (10) pour corriger toute transformation unitaire de la polarisation des photons causée par le canal optique, dans lequel le premier moyen de correction (10) est constitué d'un premier composant de correction (11) et d'un second composant de correction (12), le premier et le second composants de correction (11, 12) étant des composants distincts, le procédé comprenant les étapes suivantes

I) fournir un cadre de référence de polarisation locale avec un moyen de référence de polarisation locale dans l'émetteur (1) avec au moins deux états de polarisation non orthogonaux, un premier état de référence de polarisation locale et un second état de référence de polarisation locale, II) effectuer une ou plusieurs étapes d'étalonnage en ajustant le premier composant de correction (11) des moyens de correction (10) et la maximisation et/ou la minimisation des photons détectés dans les moyens de détection dans le récepteur dans le premier état de polarisation de référence, afin de définir le premier état de référence de polarisation locale dans le récepteur, III) effectuer une ou plusieurs étapes d'étalonnage en ajustant le second composant de correction (12) des moyens de correction (10) et la maximisation et/ou la minimisation des photons détectés dans les moyens de détection dans le récepteur dans le second état de polarisation de référence afin de définir le second état de référence de polarisation locale dans le récepteur.

2. Procédé selon la revendication 1, dans lequel le premier et/ou le second composant de correction (11, 12) du premier moyen de correction (10) comprend une lame d'onde variable, ou une lame d'onde inclinée, ou un compensateur de soleil Babinet, ou une combinaison d'une première lame quart d'onde, d'une lame demi-onde et d'une seconde lame quart d'onde, ou un contrôleur de fibre créant le comportement d'une première lame quart d'onde, d'une lame demi-onde et d'une seconde lame quart d'onde par une première, une deuxième et une troisième bobine de la fibre, ou un presseur de fibre rotatif.

3. Procédé selon l'une des revendications 1 ou 2, dans lequel le moyen de référence de polarisation locale comprend soit un moyen de polarisation, soit un séparateur de faisceau polarisant, soit un polariseur, soit des photons convertis vers le bas, soit un cristal non linéaire soit un laser produisant des photons polarisés.

4. Procédé pour fournir un émetteur (1) et deux récepteurs (2, 3) avec un cadre de référence de polarisation commun,

dans lequel l'émetteur (1) est un laser (42) ou une source de photons produisant des photons polarisés dans au moins deux polarisations non orthogonales, et dans lequel le premier récepteur (2) comprend un premier moyen de détection pour déterminer la polarisation des photons polarisés dans au moins deux états de polarisation non orthogonaux et le second récepteur (3) comprend un second moyen de détection pour déterminer la polarisation des photons polarisés dans au moins deux états de polarisation non orthogonaux, et dans lequel un premier canal optique relie l'émetteur et le premier récepteur, comprenant un premier moyen de transmission (4) pour guider les photons polarisés de l'émetteur (1) au premier récepteur (2), et un second canal optique relie l'émetteur (1) et le second récepteur (3), comprenant un second moyen de transmission (5) pour guider les photons polarisés de l'émetteur (1) au second récepteur (3), et dans lequel le premier canal optique comprend un premier moyen de correction (10) pour corriger toute transformation unitaire de la polarisation des photons causée par le premier canal optique, et/ou dans lequel le second canal optique comprend un second moyen de correction (20) pour corriger toute transformation unitaire de la polarisation des photons causée par le second canal optique, et dans lequel le premier et/ou le second moyen de correction (10, 20) consistent respectivement en un premier composant de correction (11, 21) et un second composant de correction (12, 22), et

dans lequel l'émetteur (1) envoie des photons polarisés dans le premier canal optique au premier récepteur (2) et dans le second canal optique au second récepteur (3),

dans lequel l'étalonnage du cadre de référence de polarisation commun entre l'émetteur (1) et le premier et/ou le second récepteur (2, 3), ou entre le premier et le second récepteur (2, 3) est conforme à l'une des revendications 1 à 3.

5. Procédé selon la revendication 4,

dans lequel la source de photons est une source de photons intriqués produisant des paires de photons intriqués par polarisation,

dans lequel un photon de chaque paire de photons intriqués est envoyé dans le premier canal optique au premier récepteur (2) et le second photon de chaque paire de photons intriqués est envoyé dans le second canal optique au second récepteur (3).

6. Procédé selon la revendication 5, le procédé comprenant les étapes suivantes IV) effectuer une ou plusieurs étapes d'étalonnage en ajustant le premier composant de correction (11, 21) du premier et/ou du second moyen de correction (10, 20) et la maximisation et/ou la minimisation des corrélations des paires de photons intriqués dans le premier état de polarisation de l'émetteur afin de définir le premier état de polarisation local dans le premier et/ou le second récepteur, et/ou V) effectuer une ou plusieurs étapes d'étalonnage en ajustant le second composant de correction (12, 22) du premier et/ou du second moyen de correction (10, 20) et la maximisation et/ou la minimisation des corrélations des paires de photons intriqués dans le second état de polarisation de l'émetteur afin de définir le second état de polarisation local dans le premier et/ou le second récepteur.

7. Procédé pour fournir un émetteur (1) et deux récepteurs (2, 3) avec un cadre de référence de polarisation commun,

dans lequel l'émetteur (1) est une source de photons intriqués produisant des paires de photons intriqués par polarisation, et

dans lequel le premier récepteur (2) comprend un premier moyen de détection pour déterminer la polarisation des photons polarisés dans au moins deux états de polarisation non orthogonaux et le second récepteur (3) comprend un second moyen de détection pour déterminer la polarisation des photons polarisés dans au moins deux états de polarisation non orthogonaux, et

dans lequel un premier canal optique, reliant l'émetteur (1) et le premier récepteur (2), comprend un premier moyen de transmission (4) pour guider les photons polarisés de l'émetteur (1) au premier récepteur (2), et un second canal optique, reliant l'émetteur (1) et le second récepteur (3), comprend un second moyen de transmission (5) pour guider les photons polarisés de l'émetteur (1) au second récepteur (3), et

dans lequel un photon de chaque paire de photons intriqués est envoyé dans le premier canal optique au premier récepteur (2) et le second photon de chaque paire de photons intriqués est envoyé dans le second canal optique au second récepteur (3), et

dans lequel le premier canal optique comprend un premier moyen de correction (10) pour corriger toute transformation unitaire de la polarisation des photons causée par le premier canal optique, et/ou dans lequel le second canal optique comprend un second moyen de correction (20) pour corriger toute transformation unitaire de la polarisation des photons causée par le second canal optique, et/ou

dans lequel l'émetteur (1) comprend un premier et/ou un second moyen de correction (10, 20) pour corriger toute transformation unitaire de la polarisation des photons causée par le premier et/ou le second canal optique, et

dans lequel le premier et/ou le second moyen de correction (10, 20) consistent respectivement en un premier composant de correction (11, 21) et un second composant de correction (12, 22), et

dans lequel l'étalonnage du cadre de référence de polarisation commun entre l'émetteur (1) et le premier et/ou le second récepteur (2, 3) ou entre le premier et le second récepteur s'effectue selon les étapes suivantes

I) fournir un cadre de référence de polarisation locale avec un moyen de référence de polarisation locale dans l'émetteur avec au moins deux états de polarisation non orthogonaux, un premier état de référence de polarisation locale et un second état de référence de polarisation locale,

II) effectuer une ou plusieurs étapes d'étalonnage en ajustant le premier composant de correction (11, 21) du premier et/ou du second moyen de correction (10, 20) et la maximisation et/ou la minimisation des corrélations des paires de photons intriqués dans les deux récepteurs dans le premier état de référence de polarisation locale, afin de définir le premier état de référence de polarisation locale dans le premier et/ou le second récepteur,

III) effectuer une ou plusieurs étapes d'étalonnage en ajustant le second composant de correction (12, 22) du premier et/ou du second moyen de correction (10, 20) et la maximisation et/ou la minimisation de la détection des corrélations des paires de photons intriqués dans les deux récepteurs dans le second état de référence de polarisation locale, afin de définir le second état de référence de polarisation locale dans le premier et/ou le second récepteur.

8. Procédé selon la revendication 7,
dans lequel le premier et/ou le second composant de correction (11, 12, 21, 22) du premier et/ou du second moyen de correction (10, 20) comprend une lame d'onde variable, ou une lame d'onde inclinée, ou un compensateur soleil Babinet, ou une combinaison d'une première lame quart d'onde, d'une lame demi-onde, et d'une seconde lame quart d'onde, ou un contrôleur de fibre créant le comportement d'une première lame quart d'onde, d'une lame demi-onde et d'une seconde lame quart d'onde par une première, une deuxième et une troisième bobine de la fibre, ou un presseur de fibre rotatif dans la fibre, ou est réalisé en changeant la polarisation de la pompe de la source de photons intriqués.

9. Procédé selon l'une des revendications 7 ou 8,
dans lequel le moyen de référence de polarisation locale comprend soit un moyen de polarisation, soit un séparateur de faisceau polarisant, soit un polariseur, soit des photons convertis vers le bas soit un cristal non linéaire.

10. Dispositif de commande adapté pour fournir un procédé selon l'une des revendications 1 à 3,
le dispositif de commande est relié au premier moyen de correction (10) et au premier moyen de détection, et de préférence au moyen de référence de polarisation locale.

11. Dispositif de commande adapté pour fournir un procédé selon l'une des revendications 4 à 9,
le dispositif de commande est relié au premier et/ou au second moyen de correction (10, 20) et au premier et/ou au second moyen de détection, et de préférence au moyen de référence de polarisation locale.

12. Dispositif informatique doté d'un microprocesseur et d'une mémoire non volatile, dans lequel la mémoire non volatile comprend un programme exécutable afin de fournir un procédé selon l'une des revendications 1 à 9, de préférence dans lequel le dispositif informatique est le dispositif de commande selon l'une des revendications 10 ou 11.

13. Appareil comprenant un émetteur (1) et un récepteur (2) avec un cadre de référence de polarisation commun dans au moins deux états de polarisation non orthogonaux,

dans lequel l'émetteur (1) comprend une source pour produire des photons polarisés dans au moins deux polarisations non orthogonales adaptée pour réaliser l'étape I) selon l'une des revendications 1 à 3, et
dans lequel le récepteur (2) comprend un moyen de détection pour déterminer la polarisation des photons polarisés dans au moins deux états de polarisation non orthogonaux, et
dans lequel l'émetteur (1) et le récepteur (2) sont reliés par un canal optique comprenant un moyen de transmission (4) pour guider les photons polarisés de l'émetteur au récepteur, et un premier moyen de correction pour corriger toute transformation unitaire de la polarisation des photons causée par le canal optique, et
dans lequel le premier moyen de correction consiste en au moins deux composants distincts, un premier composant de correction adapté pour effectuer l'étape II) selon l'une des revendications 1 à 3 et un second composant de correction adapté pour effectuer l'étape III) selon l'une des revendications 1 à 3.

14. Appareil comprenant un émetteur (1) et deux récepteurs (2, 3) avec un cadre de référence de polarisation commun dans au moins deux états de polarisation non orthogonaux,

dans lequel l'émetteur (1) comprend un laser (42) ou une source de photons produisant des photons polarisés dans au moins deux polarisations non orthogonales adaptés pour réaliser l'étape I) selon l'une des revendications 4 à 9, et
dans lequel le premier récepteur (2) comprend un premier moyen de détection pour déterminer la polarisation des photons polarisés dans au moins deux états de polarisation non orthogonaux et le second récepteur (3) comprend un second moyen de détection pour déterminer la polarisation des photons polarisés dans au moins deux états de polarisation non orthogonaux, dans lequel le laser (42) ou la source de photons et le premier récepteur (2) sont reliés par un premier canal optique comprenant un premier moyen de transmission (4) pour guider les photons polarisés de l'émetteur (1) au premier récepteur (2), et un premier moyen de correction (10) pour corriger toute transformation unitaire de la polarisation des photons causée par le premier canal optique, et dans lequel le laser (42) ou la source de photons et le second récepteur (3) sont reliés par un second canal optique comprenant un second moyen de transmission (5) pour guider les photons polarisés de l'émetteur (1) au second récepteur (3), et un second moyen de correction (20) pour corriger toute transformation unitaire de la polarisation des photons causée par le second canal optique, dans lequel l'émetteur (1) envoie des photons polarisés dans le premier canal optique au premier récepteur (2) et dans le second canal optique au second récepteur (3), dans lequel le premier et/ou le second moyen de correction (10, 20) consiste respectivement en un premier composant de correction (11, 21) adapté pour réaliser l'étape II) selon l'une des revendications 4 à 9, et un second composant de correction (12, 22) adapté pour réaliser l'étape III) selon l'une des revendications 4 à 9.

15. Appareil comprenant un émetteur (1) et deux récepteurs (2, 3) avec un cadre de référence de polarisation commun dans au moins deux états de polarisation non orthogonaux,

dans lequel l'émetteur (1) comprend une source de photons intriqués adaptée pour réaliser l'étape I) selon l'une des revendications 4 à 9, et dans lequel le premier récepteur (2) comprend un premier moyen de détection pour déterminer la polarisation des photons polarisés dans au moins deux états de polarisation non orthogonaux et le second récepteur (3) comprend un second moyen de détection pour déterminer la polarisation des photons polarisés dans au moins deux états de polarisation non orthogonaux, et un premier canal optique, reliant l'émetteur (1) et le premier récepteur (2), comprenant un premier moyen de transmission (4) pour guider les photons polarisés de l'émetteur (1) au premier récepteur (2), et un second canal optique, reliant l'émetteur (1) et le second récepteur (3), comprenant un second moyen de transmission pour guider les photons polarisés de l'émetteur (1) au second récepteur (3), et dans lequel un photon de chaque paire de photons intriqués est envoyé dans le premier canal optique au premier récepteur (2) et le second photon de chaque paire de photons intriqués est envoyé dans le second canal optique au second récepteur (3), dans lequel le premier canal optique comprend un premier moyen de correction (10) pour corriger toute transformation unitaire de la polarisation des photons causée par le premier canal optique, et/ou dans lequel le second canal optique comprend un second moyen de correction (20) pour corriger toute transformation unitaire de la polarisation des photons causée par le second canal optique, et/ou dans lequel l'émetteur (1) comprend un premier et/ou un second moyen de correction (10, 20) pour corriger toute transformation unitaire de la polarisation des photons causée par le premier et/ou le second canal optique et dans lequel le premier et/ou le second moyen de correction (10, 20) consiste respectivement en un premier composant de correction (11, 21) adapté pour effectuer l'étape II) selon l'une des revendications 4 à 9, et un second composant de correction (12, 22) adapté pour effectuer l'étape III) selon l'une des revendications 4 à 9.

**Fig. 1a**

**Fig. 1b**

Fig. 2a

Fig. 2b

Fig. 2c

EP 4 005 115 B1

*Fig. 3*

EP 4 005 115 B1

Fig. 4a

Fig. 4b

Fig. 5

EP 4 005 115 B1

**EP 4 005 115 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090268276 A1

**Non-patent literature cited in the description**

- Space-to-Ground Quantum Key Distribution. *Proc. Of SPIE*, vol. 11180

- Self-error-rejecting quantum state transmission of entangled photons for faithful quantum communication without calibrate reference frames. *ArXiv: 1809.00105v1*